## Europäisches Patentamt
## European Patent Office
## Office européen des brevets

(19)

(11) Publication number: **0 039 664**
**B1**

(12) **EUROPEAN PATENT SPECIFICATION**

(45) Date of publication of the patent specification: 14.03.84

(21) Application number: **81830069.1**

(22) Date of filing: **05.05.81**

(51) Int. Cl.³: **G 02 C 13/00**

(54) A holder for supporting spectacle frames during manufacturing thereof.

(30) Priority: 06.05.80 IT 2172280 U
08.05.80 IT 2175280 U
08.05.80 IT 2175380 U

(43) Date of publication of application:
**11.11.81 Bulletin 81/45**

(45) Publication of the grant of the patent:
**14.03.84 Bulletin 84/11**

(84) Designated Contracting States:
**AT BE CH DE FR GB LI**

(56) References cited:
**DE - A - 2 335 857**
**FR - A - 2 351 766**
**US - A - 3 406 232**

(73) Proprietor: **P.A.I. CRISTAL di BELLANI Emanuele, Angelo e BISI Carla & C.S.n.c., Via Massarani, 2, I-20139 Milano (IT)**

(72) Inventor: **Bellani, Emanuele, Via Val di Sole, 12, Milano (IT)**

(74) Representative: **Adorno, Silvano et al, c/o SOCIETA' ITALIANA BREVETTI S.p.A. Via Carducci, 8, I-20123 Milano (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

BUNDESDRUCKEREI BERLIN

A holder for supporting spectacle frames during manufacturing thereof

The present invention relates to holders for spectacle frames that are adapted to elastically support the frames during the finishing of their surface.

In the process of manufacturing spectacles, the rims of the lenses are linked together by a bridge (forming the so-called frame) and the legs or bars are formed by moulding, punching, etc. a plastic or metal material. They are successively polished to remove burrs, sharp corners and other machining marks in suitable rotating devices called tumbling barrels containing small abrasive particles or grains coated with abrasive materials so as to obtain a complete frame (with legs) ready to be assembled with the lenses. For sake of simplicity in the following the term »frame« will be used to mean the assembly of the rims and the legs when the latter require a similar treatment. When considering metal legs or different legs that anyhow do not require a similar finishing, the term »frame« will mean only the lens supporting portion.

Polishing and finishing operations are being carried out placing the frames in tumbling barrels or other rotating containers together with abrasive particles and substances as disclosed for example by US Patent No. 3 406 232, in case fastening the frames to bars longitudinally disposed with respect to the axis of rotation.

It has been found that the above operations produce a satisfactory product only when the frames (or the rimslegs assemblies) are kept fixed by suitable elastic supports during such operations. More particularly the portions of the supports that are in contact with the frame must be properly covered or protected to avoid damages to the frames at the contact points. Moreover the length of the square cross-section bars in the barrels to which such supports must be secured is relatively short and it is of advantage for the production to reach the highest density of mounted frames without too much complexity.

It is an object of the present invention to realize holders for supporting spectacle frames during the polishing and finishing operations in tumbling barrels or similar rotating machine, that are easy to build, allow for a full and elastic support of the frames and are easy to install.

It is another object of the present invention to realize a double holder for simultaneously supporting two spectacle frames (without legs) by means of an elastic clamping, easy to release and that does not ruin the frames in the contact area.

According to the present invention there is provided a holder for supporting spectacle frames during polishing and finishing operations in a rotating device such as a tumbling barrel containing abrasive material, characterized in that the holder comprises a clamp securable to a bar within the device and at least two elongated resilient members fixed to said clamp, which members are shaped by being bent to supportively engage rims or legs of spectacle frames. This way the spectacle frames are easily mounted in the tumbling barrel and elastically supported, thus avoiding the inconveniences of the prior art such as legs shaking, scratches in the fatening areas and so on.

The invention will now be described in some preferred but not limiting embodiments, reference being made to the attached drawings in which:

Figure 1 and 2 are a top view and a front view respectively of a holder according to the invention;

Figure 3 and 4 show two modified embodiments of the holder of Figs. 1 and 2;

Figures 5 and 6 are a top view and a front view respectively of a double holder according to the invention;

Figure 7 shows a modified embodiment of the double holder;

Figures 8 and 9 are a top view and a cross-section view respectively of another embodiment of the invention;

Figure 10 shows a modified shape for the central loop; and

Figures 11 and 12 show a modified embodiment of the holders of Figs. 8—10.

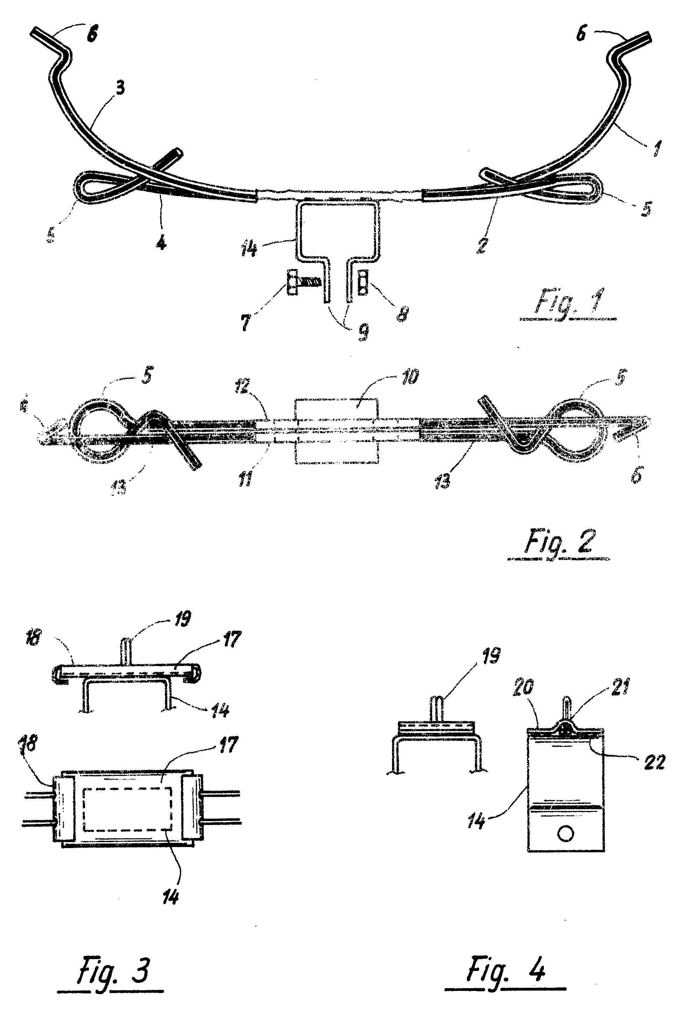

Refering now to Figs. 1 and 2 a holder according to the invention comprises a bracket or clamp 14 adapted to be secured to the square cross-section bars of a polishing device, and elongated resilient members for supporting the spectacle frames, respectively 1, 2, 3 and 4. The end portions of members 2 and 4 are shaped to form loops or eyes 5 adapted to sustain the legs of the spectacles whereas the end portions of members 1 and 3 are shaped to form recesses 6 adapted to engage the rims of the lenses. Preferably such elongated members are steel slender rods or wires, shaped to form the loops, the recesses and the necessary bendings, welded at their middle portions to flat surface 10 of the clamp. Still preferably said rods are only two, as best seen in Fig. 2, secured to the clamp at their central portions. Each rod is shaped at the ends to form a loop 5 and a recess 6 respectively. This way one gets the maximum simplicity in order to shape the rods which are all formed into the same shape and mounted reversed with respect to each other. According to the embodiment shown in Figs. 1 and 2, fastening of the rods to the surface of bracket 10 is carried out by means of small metal tubes, respectively 11 and 12 enclosing the middle portion of each rod and fixed to it by crimping. The tube thereafter is welded to surface 10 of clamp 14. Advantageously the rods are inserted into such small tubes still straight and besides making easier the assembly, the tubes reinforce the structure to reduce the stress of the rods at the point of maximum flexure.

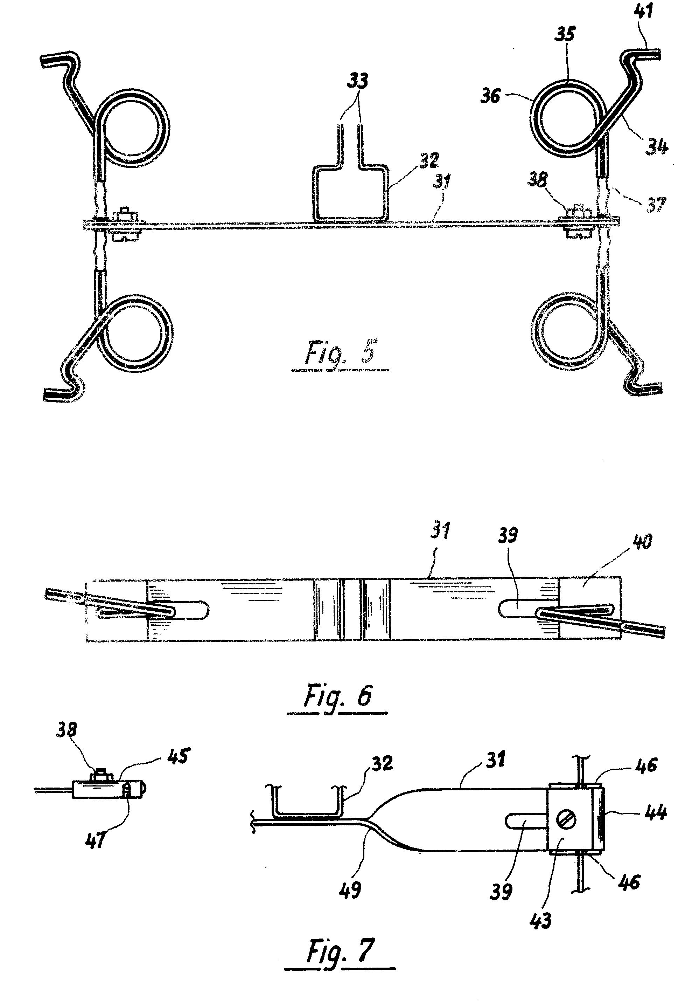

According to the embodiment shown in Fig. 3, clamp 14 can also be welded to a small plate 17 having horizontal edges folded over a second small plate 18 having vertical edges folded over the first one. Thus a sort of flat box is formed wherein the supporting rods are blocked. Four side holes are provided in the folded portion of plate 18 through which the rods pass whereas their middle bent portions 19 project from a central hole in the same plate 18. This way positioning and blocking of the rods is achieved without outer tubes 11, 12.

According to the embodiment shown in Fig. 4, a plate 20 having a central channel 21 is welded (e. g. by spot weld 22) to clamp 14 and the rods are disposed within the channel allowing for a protrusion of the folded middle portion 19.

The rods are preferably formed by stainless steel and covered with plastic material so to minimize the stresses at the contact points. More particularly said covering ca be obtained by means of lengths 13 of plastic hose or deformable rubber hose that are driven over the shaped rods after suitable greasing or oiling to assume their shape.

Clamp 14 ends with two flanges 9 having holes through which a bolt 7 passes and is tightened by a nut 9. It is possible to built the clamp with a different configuration so as to mount two pairs of rods and obtain a double (or twin) holder.

Figs. 5 and 6 show another embodiment of the invention , particularly a double holder comprising a flat bar or metal strap 31 having a clamp 32 attached to its middle portion, e. g. by welding, the clamp being provided with end flanges 33 drilled for the passage of a bolt (not shown).

At the ends of strap 31 there are secured supporting members in form of resilient and slender metal rods 35 having tips shaped to form recesses or indentations 41. Said slender rods can be wires of stainless steel having a diameter of 2—3 mm. Over the central portion of each wire is mounted a sleeve 37 formed by a rigid metal tube joined to the wire by means of deformation or crimping.

The tube is then fixed to strap 31 in a way that will be explained in the following, so that the wire rises substantiall orthogonal from the strap. Furthermore the wire is shaped to form a coil 36 on each side of the strap, before the in dented recess 41, and the portions of wire free from the sleeve are fully covered by lenghts of hose 34, of rubber or other plastic material.

The elastic supporting member is built from a straight length a steel wire onto which is sheathed, positioned and crimped a sleeve 37. Thereafter the wire is shaped to form the coils and the recesses. Then the lengths of plastics are driven onto the supporting member using a suitable lubricant and sleeve 37 is welded to a plate 40 to be mounted on strap 31. Plate 40 is fixed by means of a securing bolt 38 and an elongated slot 39 is provided adjacent the end of the strap to adjust the position of the supporting member.

A spectacle frame, without legs, is mounted on each side of the strap by drawing nearer end portions 41 to engage the rims of the lenses. The engagement of the frame over the holder causes an elastic deformation of the ends of the rods and of the coil spring formed by the coil (or coils) 36 that avoids excessive stresses to the supporting wire and simultaneously provides for a constant bias force. Sleeve 37 furthermore reduces the shearing stress at the base of the wire whereas the full covering of the same avoids damages to the frame during the polishing as well as in the mounting step.

According to another embodiment shown in Fig. 7, strap 31 has two 90° twists 49 just before the central portion to which clamp 32 is welded, and the fastening means for the rods includes a small drilled plate 45, having three folded edges (44, 46, 46). The rod is clasped between strap 31 and plate 45, possibly with an additional covering plate 43. Two holes or slots 47 on edges 46 allow for the positioning of the rod. In this embodiment too there are avoided securing metal sleeves.

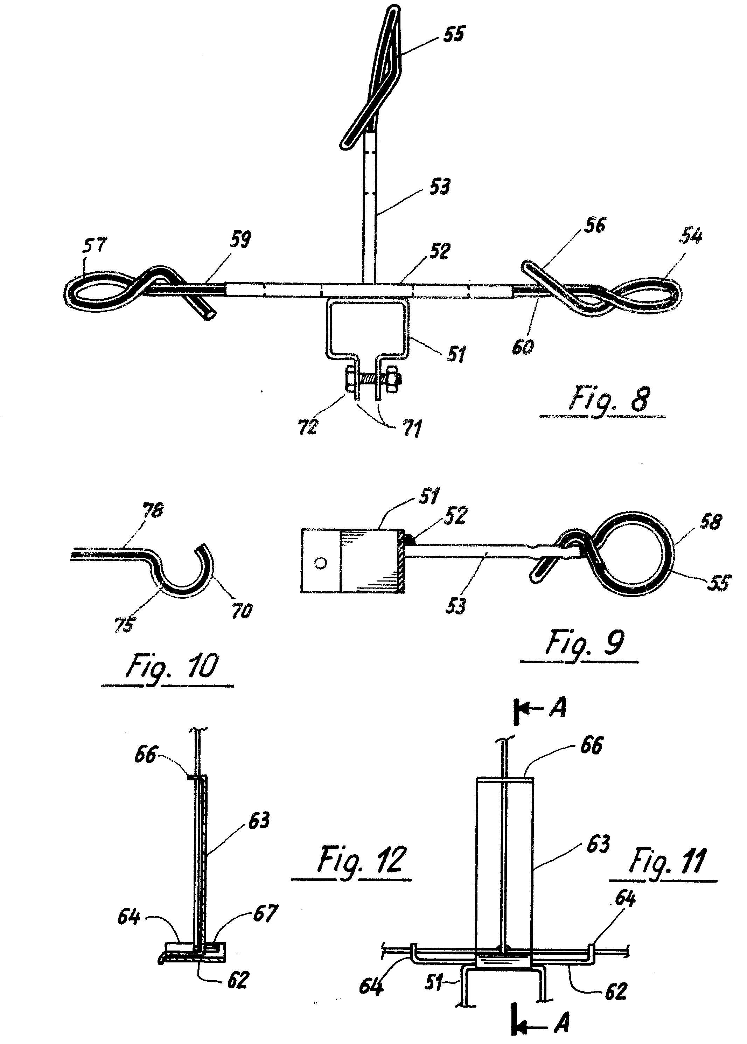

Referring now to Figs. 8—10, according to a further embodiment of the invention the holder comprises rods 60 joined together to form a T structure and attached to a clamp 51 having flanges 71 and a securing bolt 72. The free ends of the T arms are shaped to form loops, respectively a central loop 55 and two side loops 54 and 57. The rods are contained in metal sleeves or tubes, respectively 52 and 53, crimped as before. The terminal and free portions of the arms are covered with plastic material 56, 58, 59.

To use the holder, already secured to the bar of the barrel, the spectacle legs are introduced into the side loops 54 and 57 and the bridge of the rims is blocked in loop 55 which is temporarily optened to receive it. To make easier this operation the loop of the central arm can be shaped to form a hook as shown in Fig. 10. In said figure the hook 70 formed by rod 75 and covered by hose 78 engages the bridge between the spectacle rims after a slight elastic deformation.

The embodiment shown in Fig. 11 and cross-sectioned along line A-A in Fig. 12, provides for a T structure formed by an elongated plate 62 having folded edges 64 and welded to clamp 51, and by a second plate 63 having a folded edge 66 and welded to the former.

The folded edges are drilled to allow the passage of the rods which are bent for a better fixing (see bending 67). This way one obtains a strong holder easy to assemble and without metal sleeves.

Although it is preferable that the rods have a circular cross-section it is possible to use also elongated members having different cross-sections, such as flat bars or straps as well as different, but functionally equivalent shapes for the loops, the recesses and the clamp.

**Claims**

1. A holder for supporting spectacle frames during polishing and finishing operations in a rotating device such as a tumbling barrel containing abrasive material, characterized in that the holder comprises a clamp (14; 32; 51) securable to a bar within the device and at least two elongated resilient members (1, 2, 3, 4, Fig. 1; 35, Fig. 5; 54, 55, 57, Fig. 8) fixed to said clamp, which members are shaped by being bent to supportively engage rims or legs of spectacle frames.

2. A holder as claimed in claim 1, characterized in that the elongate members are two slender steel rods (or wires) partially covered with plastic material (13) and fixed to the clamp (14) by welding at an intermediate position, one end of each rod being shaped as a closed loop and the other end of the same rod being shaped to form a recess (Fig. 1, 2)

3. A holder as claimed in claim 2, characterized in that it comprises reinforcing tubular sleeves (11, 12) which are welded to the clamp and which surround the central portion of the rods and which are fastened to the latter by deformation or crimping (Fig. 1, 2).

4. A holder as claimed in claim 3, characterized in that said plastic material is a length of rubber hose into which the rods are forcibly inserted with lubrication.

5. A holder as claimed in claim 1, characterized in that it comprises a thin metal bar or strap (31) fixed at its intermediate portion to the clamp (32), said at least two resilient members extending from both sides of the strap and substantially orthogonal to it (Fig. 5, 6).

6. A holder as claimed in claim 5, characterized in that each one of said elongated resilient members comprises a slender steel rod or wire fixed to the strap at its central portion and having its ends shaped to form recesses or identations (41) for supportively engaging a spectacle rim, the rod being bent, between its central portion and the idented or recessed ends, to form at least one coil (36) acting as a spring (Fig. 5, 6).

7. A holder as claimed in claim 6, characterized in that each of said elongated members is fixed to the strap by means of a plate (40), the plate being secured via a slot in the strap whereby plate position is adjustable along the strap (Fig. 7).

8. A holder as claimed in claim 1, characterized in that there are three resilient members consisting of three arms which extend from the clamp along different directions, said arms being formed by slender metal rods (or wires) (60) covered with plastic material (56, 58, 59) and shaped at the free ends to form loops or rings (54, 55, 57, Fig. 8, 9).

9. A holder as claimed in claim 8, characterized in that said three arms are substantially straight and orthogonal to each other, that they lay in the same plane, the side arms being for supportively engaging spectacle legs and the central arm being for supportively engaging a spectacle front bridge.

10. A holder as claimed in claim 9, characterized in that portions of said arms near the junction are sheathed by metal sleeves (or tubes) (52, 53) and that said sleeves are attached to the rods by means of deformation or crimping, said sleeves being welded together to form a T and to the clamp (Fig. 8).

11. A holder as claimed in claim 10, characterized in that the loop of the central arm (70) is not closed to allow for the introduction of the bridge after a temporary elastic deformation (Fig. 10).

**Patentansprüche**

1. Halter zum Stützen von Brillenfassungen während Polier- und Fertigungsarbeiten in einer Drehvorrichtung, wie einer Schleifmaterial enthaltenden Putztrommel, dadurch gekennzeichnet, daß der Halter eine innerhalb der Vorrichtung befestigbare Klemme (14; 32; 51) und zumindest zwei längliche federnde, an der Klemme fixierte Glieder (1, 2, 3, 4, Fig. 1; 35, Fig. 5; 54, 55, 57, Fig. 8) umfaßt, welche Glieder durch Biegen geformt werden, um mit Rändern oder Bügeln von Brillenfassungen stützend einzugreifen.

2. Halter nach Anspruch 1, dadurch gekennzeichnet, daß die länglichen Glieder zwei schmale Stahlstäbe (oder Drähte) sind, welche teilweise mit plastischem Material (13) bedeckt und durch Schweißen an einer dazwischenliegenden Stelle an der Klemme (14) fixiert sind, wobei ein Ende jedes Stabes als geschlossene Schleife geformt ist und das andere Ende desselben Stabes so geformt ist, daß es eine Ausnehmung bildet (Fig. 1, 2).

3. Halter nach Anspruch 2, dadurch gekennzeichnet, daß er an die Klemme angeschweißte rohrförmige Verstärkungshülsen (11, 12) umfaßt, welche den zentralen Abschnitt der Stäbe umgeben und an den letzteren durch Verformung oder Faltung befestigt sind (Fig. 1, 2).

4. Halter nach Anspruch 3, dadurch gekennzeichnet, daß das plastische Material ein Abschnitt eines Gummischlauches ist, in welchen die Stäbe mit Schmierung mit Zwang eingefügt sind.

5. Halter nach Anspruch 1, dadurch gekennzeichnet, daß er eine dünne Metallstange oder Lasche (31) umfaßt, welche an ihrem dazwischenliegenden Abschnitt an der Klemme (32) fixiert ist, wobei sich diese zumindest zwei federnden Glieder von beiden Seiten der Lasche und im wesentlichen orthogonal zu dieser erstrecken (Fig. 5, 6).

6. Halter nach Anspruch 5, dadurch gekennzeichnet, daß jedes der länglichen federnden Glieder einen schmalen Stahlstab oder -draht umfaßt, welcher an seinem zentralen Abschnitt an der Lasche fixiert ist und wobei seine Enden so geformt sind, daß sie Ausnehmungen oder Vertiefungen (41) zum stützenden Eingriff mit einer Brillenfassung bilden, und wobei der Stab zwischen seinem zentralen Abschnitt und den mit Vertiefungen oder Ausnehmungen versehenen Enden gebogen ist, um zumindest eine Schlinge (36), die als Feder wirkt, zu bilden (Fig. 5, 6).

7. Halter nach Anspruch 6, dadurch gekennzeichnet, daß jedes der länglichen Glieder an der Lasche mittels einer Platte (40) fixiert ist, wobei die Platte über einen Schlitz in der Lasche befestigt ist, wodurch die Plattenposition entlang der Lasche einstellbar ist (Fig. 7).

8. Halter nach Anspruch 1, dadurch gekennzeichnet, daß drei federnde Glieder vorgesehen sind, die aus drei Armen bestehen, welche sich von der Klemme entlang verschiedener Richtungen erstrecken, wobei die Arme aus mit plastischem Material (56, 58, 59) bedeckten Metallstäben (oder Drähten) (60) bestehen, die an ihren freien Enden zur Bildung von Schleifen oder Ringen (54, 55, 57, Fig. 8, 9) geformt sind.

9. Halter nach Anspruch 8, dadurch gekennzeichnet, daß die drei Arme im wesentlichen gerade und orthogonal zueinander sind, daß sie in der gleichen Ebene liegen, wobei die Seitenarme zum stützenden Eingreifen mit den Brillenbügeln und der zentrale Arm zum stützenden Eingreifen mit einer Brillenvorderbrücke gehören.

10. Halter nach Anspruch 9, dadurch gekennzeichnet, daß Abschnitte dieser Arme in der Nähe der Verbindungsstelle mit Metallhülsen (oder Rohren) (52, 53) umhüllt sind und daß diese Hülsen mittels Verformung oder Faltung an den Stäben befestigt sind, wobei die Hülsen zur Bildung eines T zusammen- und an der Klemme angeschweißt sind (Fig. 8).

11. Halter nach Anspruch 10, dadurch gekennzeichnet, daß die Schlinge des zentralen Arms (70) nicht geschlossen ist, um das Einführen der Brücke nach einer vorübergehenden elastischen Verformung zu ermöglichen (Fig. 10).

**Revendication**

1. Un support pour porter les montures de lunettes pendant les opérations de polissage et de finition dans un dispositif tournant tel qu'un tonneau basculant renfermant de la matière abrasive, caractérisé en ce qu'il comprend une pince (14; 32; 51) susceptible d'être fixée à une barrette à l'intérieur du dispositif et au moins deux organes élastiques de forme allongée (1, 2, 3, 4, fig. 1; 35, fig. 5; 54, 55, 57, fig. 8) fixés à ladite pince, ces organes étant recourbés pour venir au contact des cercles ou des branches des montures et pour les supporter.

2. Un support comme revendiqué en revendication 1, caractérisé en ce que les organes allongés sont constitués par deux tiges (ou fils) d'acier de faible diamètre partiellement recouvertes de matière plastique (13) et fixées par soudure à la pince (14) à une position intermédiaire sur leur longueur, une des extrémités de chaque tige étant conformée en boucle fermée et l'autre l'étant de façon à constituer un redan (fig. 1 et 2).

3. Un support comme revendiqué en revendication 2, caractérisé en ce qu'il comprend des manchons tubulaires de renfort (11, 12) qui sont soudés à la pince et entourent la partie centrale des tiges, et qui sont fixés à celles-ci par déformation ou sertissage (fig. 1 et 2).

4. Un support comme revendiqué en revendication 3, caractérisé en ce que ladite matière plastique est constituée par une longueur de tuyau de caoutchouc dans lequel les tiges sont insérées à force avec lubrification.

5. Un support comme revendiqué en revendication 1, caractérisé en ce qu'il comprend une barrette ou bande métallique mince (31) fixée par sa partie intermédiaire à la pince (32), les deux organes élastiques s'étendant à partir des deux côtés de la bande et substantiellement perpendiculairement à celle-ci (fig. 5, 6).

6. Un support tel que revendiqué en revendication 5, caractérisé en ce que chacun desdits organes élastiques allongés comprend une mince tige ou fil d'acier fixé à la bande par sa partie centrale et dont les extrémités sont conformées pour constituer des redans ou des dents (41) en vue de venir au contact d'un cercle de lunette et de le supporter, la tige étant recourbée entre sa partie centrale et ses extrémités à redans ou à dents, de façon à réaliser au moins une boucle (36) agissant à la façon d'un ressort (fig. 5 et 6).

7. Un support comme revendiqué en revendication 6, caractérisé en ce que chacun desdits organes allongés est fixé à la bande par le moyen d'une plaquette (40), la fixation de celle-ci s'effectuant par l'intermédiaire d'une encoche découpée dans la bande, grâce à quoi la position de cette plaquette est réglable sur la longueur de la bande (fig. 7).

8. Un support comme revendiqué en revendication 1, caractérisé en ce qu'il comprend trois organes élastiques faits de trois bras qui s'étendent à partir de la pince suivant des directions différentes, lesdits bras étant constitués par des tiges (ou fils) métalliques (60) de faible diamètre, recouvertes de matière plastique (56, 58, 59) et conformées à leurs extrémités libres en boucles ou anneaux (54, 55, 57, fig. 8 et 9).

9. Un support comme revendiqué en revendication 8, caractérisé en ce que les trois bras sont substantiellement rectilignes et à angle droit les uns par rapport aux autres, en ce qu'ils sont situés dans un même plan, les bras latéraux étant destinés à venir au contact des branches des lunettes et à les supporter, et la branche centrale étant prévue pour venir de son côté au contact du pont antérieur des lunettes pour le supporter.

10. Un support comme revendiqué en revendication 9, caractérisé en ce que les parties desdits bras les plus rapprochées de la jonction de ceux-ci sont gainées par des manchons (ou tubes) métalliques (52, 53) et en ce que lesdits manchons sont fixés aux tiges par le moyen d'une déformation ou d'un sertissage, ces manchons étant soudés d'une part les uns aux autres pour constituer un T et d'autre part à la pince elle-même (fig. 8).

11. Un support comme revendiqué en revendication 10, caractérisé en ce que la boucle du bras central (70) n'est pas fermée afin de permettre l'introduction du pont après déformation élastique temporaire (fig. 10).

*Fig. 1*

*Fig. 2*

*Fig. 3*

*Fig. 4*

Fig. 5

Fig. 6

Fig. 7

*Fig. 8*

*Fig. 10*

*Fig. 9*

*Fig. 12*

*Fig. 11*